# EUROPEAN PATENT APPLICATION

(11) **EP 3 567 301 A1**
(43) Date of publication of application: **13.11.2019**
(21) Application number: 19173815.2
(22) Date of filing: 10.05.2019
(51) Int. Cl.: F21S 8/00

(54) **CEILING LUMINAIRE**

(30) Priority: 11.05.2018 GB 201807695
(71) Applicant: F.W. Thorpe PLC, Redditch, Wercestershire B98 9HH (GB)
(72) Inventor: ALLCOCK, Michael, Redditch, Worcestershire B98 9HH (GB); GOULD, Thomas, Redditch, Worcestershire B98 9HH (GB)
(74) Representative: Swindell & Pearson Limited

(57) **Abstract**

A ceiling luminaire, comprising: a picture 10 ; and a first lighting arrangement 20 arranged to illuminate the picture 10; a frame 30 arranged to define a boundary of the picture; and a second lighting arrangement 40 arranged to provide room illumination from the frame 30.

## Description

### TECHNOLOGICAL FIELD

Embodiments of the present disclosure relate to a ceiling luminaire. Some relate to a ceiling luminaire for location within a grid arrangement of a suspended ceiling.

### BACKGROUND

A ceiling luminaire is a light fitting that for fixing to a ceiling to provide room illumination. Some buildings, such as office buildings, may have rooms with a suspended ceiling. The suspended ceiling may include a plurality of tiles, arranged in a grid. A ceiling luminaire may be positioned in the grid to provide room illumination.

### BRIEF SUMMARY

According to various, but not necessarily all, embodiments there is provided a ceiling luminaire, comprising: a picture; and a first lighting arrangement arranged to illuminate the picture; a frame arranged to define a boundary of the picture; and a second lighting arrangement arranged to provide room illumination from the frame.

The second lighting arrangement may be arranged to provide room illumination from the frame by directing light in a substantially downwards direction in use.

The first lighting arrangement may be arranged to illuminate the picture by directing light through the picture. The light that is directed through the picture may be directed in a substantially downwards direction in use.

The first lighting arrangement may comprise at least one light source for generating light to illuminate the picture. The ceiling luminaire may further comprise at least one light guide for guiding light generated by the light source along at least a first dimension and for directing the generated light through the picture at various positions along the first dimension.

The light guide may be positioned above the picture in use. The light source may be provided on at least one circuit board. The frame may define a slot for receiving the circuit board.

The second lighting arrangement may comprise at least one light source for generating light to provide room illumination. The light source may be provided on at least one circuit board. The frame may define a slot for receiving the at least one circuit board. The light source may be located within the frame.

The second lighting arrangement may comprise at least one louvre arranged to constrict the beam angle of light emitted by the second lighting arrangement via the frame. The louvre may be configured to constrict the beam angle of light emitted by the second lighting arrangement in at least two dimensions. The louvre may be located within the frame.

The picture may be positioned in a recess defined by the frame. The picture may be arranged such that, in use, the picture is substantially parallel with a ceiling to which the ceiling luminaire is mounted.

According to various, but not necessarily all, embodiments there is provided examples as claimed in the appended claims.

### BRIEF DESCRIPTION

Some example embodiments will now be described with reference to the accompanying drawings in which:
fig. 1 illustrates a schematic of a ceiling luminaire mounted to a ceiling;
fig. 2 illustrates a cross-sectional view of a portion of the ceiling luminaire;
fig. 3 illustrates a close-up view of a portion of the ceiling luminaire; and
fig. 4 illustrates a plurality of co-located ceiling luminaires.

### DETAILED DESCRIPTION

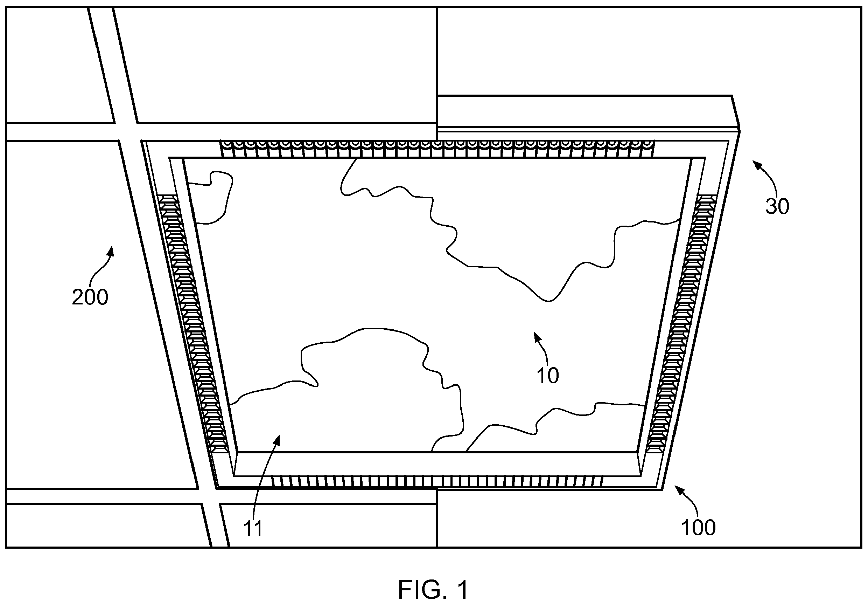

Fig. 1 illustrates a ceiling luminaire 100. The ceiling luminaire 100 comprises a picture 10 and a frame 30. The picture 10 may, for example, be an image such as a photograph, a (print of a) painting or a drawing. In the illustrated example, the picture 10 is a photograph of a daytime sky including a plurality of clouds. In other examples, the picture 10 might be different. The picture 10 might be formed on a substrate such as a thermoplastic that is Tp(a) fire-rated.

The frame 30 is arranged to define a boundary of the picture 10. That is, the frame 30 surrounds and defines the visible edge of the picture 10. The frame 30 defines a recess 11 in which the picture 10 is positioned. In this regard, the ceiling luminaire 100 can be considered to be a recessed ceiling luminaire. The picture 10 may be arranged to be substantially parallel with the ceiling 200 to which the ceiling luminaire 100 is mounted.

Fig. 1 illustrates a suspended ceiling 200 which includes a plurality of tiles, arranged in a grid. In some examples, the ceiling luminaire 100 may be positioned within such a grid, as shown in fig. 1. In these examples, the frame 30 (and therefore the luminaire 100) might be 600 mm x 600 mm in size. In other examples, however, the ceiling luminaire 200 might be mounted to a ceiling that is not suspended and may protrude outwards from the ceiling 200.

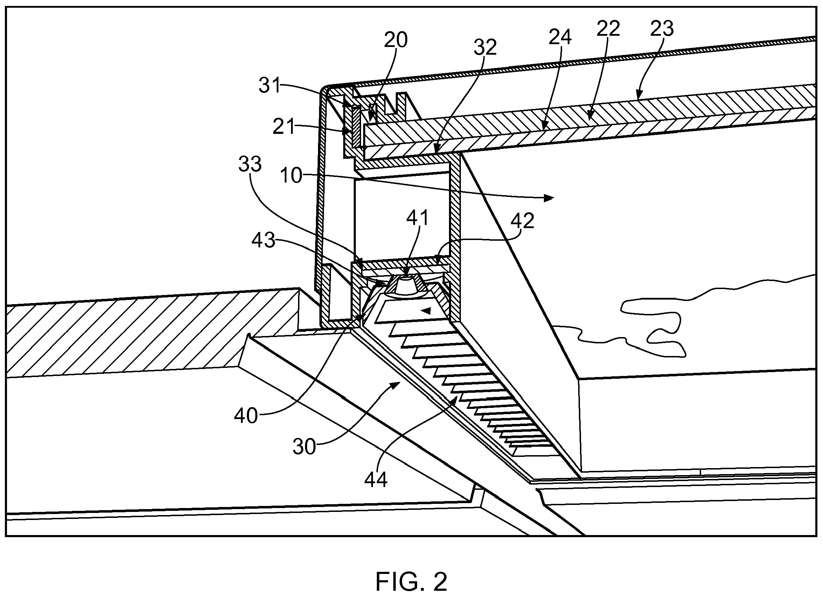

Fig. 2 illustrates a cross-sectional view of a portion of the ceiling luminaire 100. The ceiling luminaire 100 further comprises a first lighting arrangement 20 that is arranged to illuminate the picture 10 and a second lighting arrangement 40 arranged to provide room illumination from the frame 30.

The first lighting arrangement 20 is arranged to illuminate the picture 10 by directing light through the picture 10. That is, the purpose of the first lighting arrangement 20 is primarily to illuminate the picture 10, rather than to illuminate the room in which the ceiling luminaire 100 is located. The illuminated picture 10 might be considered to be alterative to a skylight, and could be used in circumstances where use of a skylight is impossible or impractical.

The first lighting arrangement 20 comprises at least one light source (not shown) for generating light to illuminate the picture 10. In the illustrated example, the light source is located on a circuit board 21. In some embodiments, a plurality of light sources is provided. The light source(s) might be one or more light emitting diodes (LEDs). For instance, multiple LEDs might be arranged along (the length of) the circuit board 21. In the illustrated example, the length of the circuit board 21 extends generally into the page and along the frame 30. The circuit board 21 is received by a first slot 31 in the frame 30 in the illustrated example.

The first lighting arrangement 20 further comprises at least one light guide 22. The light guide 22 is arranged to guide light generated by the light source(s) of the first lighting arrangement 20 along a first dimension and is for directing the generated light through the picture 10 at various positions along the first dimension. Light might be transmitted through the light guide via total internal reflection (TIR). Light that exits the light guide 22 and is directed through the picture 10 is, in use (i.e. when the ceiling luminaire 100 is fitted to a ceiling 200), directed in a substantially downwards direction, enabling the picture to be (more easily) viewed by people located underneath the ceiling luminaire 100.

The light guide 22 might extend along and across the entire extent of the picture 10 (both in the first dimension and in a second dimension, substantially perpendicular to the first dimension).

The body of the light guide 22 might, for example, be made from polymethyl methacrylate (PMMA). The light guide 22 may comprise an upper reflective surface 23 for assisting the transmission of light through the body of the light guide 22. The upper reflective surface 23 might, for instance, be made from polyethylene terephthalate (PET). An anti-wetting film that might be located on a lower surface 24 of the light guide 22 which might, for example, be made from PET. If both the light guide 22 and the substrate on which the picture 10 is formed are each made from a glossy plastics material, in some instances, placing them together might make it appear as if water is positioned between them. The anti-wetting film is textured on both sides to prevent this appearance from being present.

It can be seen in fig. 2 that the frame 30 is configured to support both the light guide 22 and the substrate on which the picture 10 is formed. In this regard, the frame 30 includes a supporting platform 32 to provide the support. An edge region of the picture 10 is arranged to rest on the supporting platform 32. The light guide 22 is located above the substrate/picture 10 in use (i.e. when the ceiling luminaire 100 is fitted to a ceiling 200). In the illustrated example, the light guide 22 is located on and supported by the substrate comprising the picture 10.

The second lighting arrangement 40 is arranged to provide room illumination from the frame 30. Room illumination is provided by directing light in a substantially downwards direction in use.

The second lighting arrangement 40 comprises at least one light source 41 for generating light to provide room illumination. The light source(s) 41 are located within the frame 30. The light source(s) 41 that are provided in the second lighting arrangement 40 may be different from that/those provided in the first lighting arrangement 20. That is, none of the light source(s) that form part of the first lighting arrangement 20 form part of the second lighting arrangement 40, and none of the light source(s) that form part of the second lighting arrangement 40 form part of the first lighting arrangement 20. This potentially enables the room illumination provided by the second lighting arrangement 40 to be controlled separately from the picture illumination provided by the first lighting arrangement 20. For example, the brightness of the illumination provided by the second lighting arrangement 40 could be reduced or increased without affecting the brightness of the picture 10.

It was explained above that the frame 30 defines a recess in which the picture 10 is positioned. The picture 10 might be recessed by around 30 mm relative to the position of the light source(s) 41 in the frame 30.

In this example, a plurality of light sources 41 is provided in the form of a plurality of LEDs arranged along (the length of) a circuit board 42. The length of the circuit board 42 generally extends into the page in fig. 2. The light sources are arranged on the underside of the circuit board 42 in the illustrated example to enable light to be directed downwardly. The frame 30 comprises a second slot 33 for receiving the circuit board 42. The second lighting arrangement 40 might include one or more optical devices 43 (such as one or more lenses and/or one or more reflectors) for each light source, to control distribution of the light emitted by that light source.

In the illustrated example, the second lighting arrangement 40 comprises at least one louvre 44 arranged to constrict the beam angle of light emitted by the second lighting arrangement 40 via the frame 30. The louvre 44 is arranged to constrict the beam angle of light emitted by each light source 41 of the second lighting arrangement 40. The louvre 44 is located within the frame 30.

The louvre 44 defines a series of chambers along its length (and along the frame 30), where each chamber is defined by four walls. Two of the walls are arranged to constrict the beam angle of light emitted by a light source 41 located in a chamber in one dimension, and the other two walls are arranged to constrict the beam angle of light emitted by that light source 41 in a different, orthogonal, dimension.

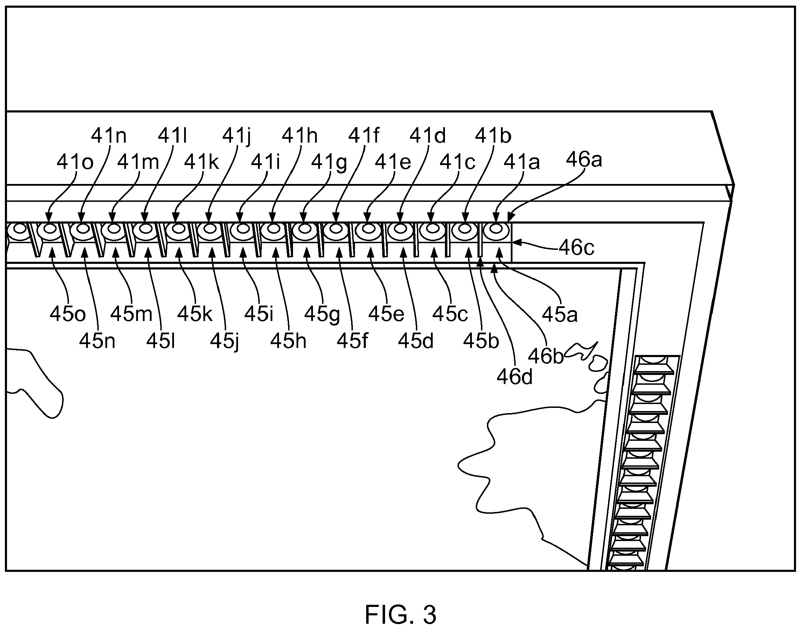

Fig. 3 illustrates a close-up view of a portion of the ceiling luminaire 100. The louvre 44 defines a series of chambers 45a-45o. Light is directed downwardly, in use, from each chamber 45a-45o by a light source 41a-41o located in that chamber 45a-45o. As mentioned above, each chamber 45a-45o is defined by four walls, two of which are arranged to constrict the beam angle of light emitted from that chamber 45a-45o in one dimension, the other two of which are arranged to constrict the beam angle of light emitted from that chamber 45a-45o in a different orthogonal dimension. In the example illustrated in fig. 3, the two walls labelled with the reference numerals 46a and 46d are arranged to constrict the beam angle of light emitted from the rightmost chamber 45a in one dimension and the other two walls 46c, 46d defining that chamber 45a are arranged to constrict the beam angle of light emitted from that chamber 45a in the other dimension. One of the walls 46d also defines part of the adjacent chamber 45b and acts as a partitioning wall that separates the rightmost chamber 45a from the adjacent chamber 45b. The other chambers 45b-45o have a structure which corresponds with that of the rightmost chamber 45a.

In some examples, the beam angle in each of the two dimensions might be in the range 40-70 degrees, such as 65 degrees.

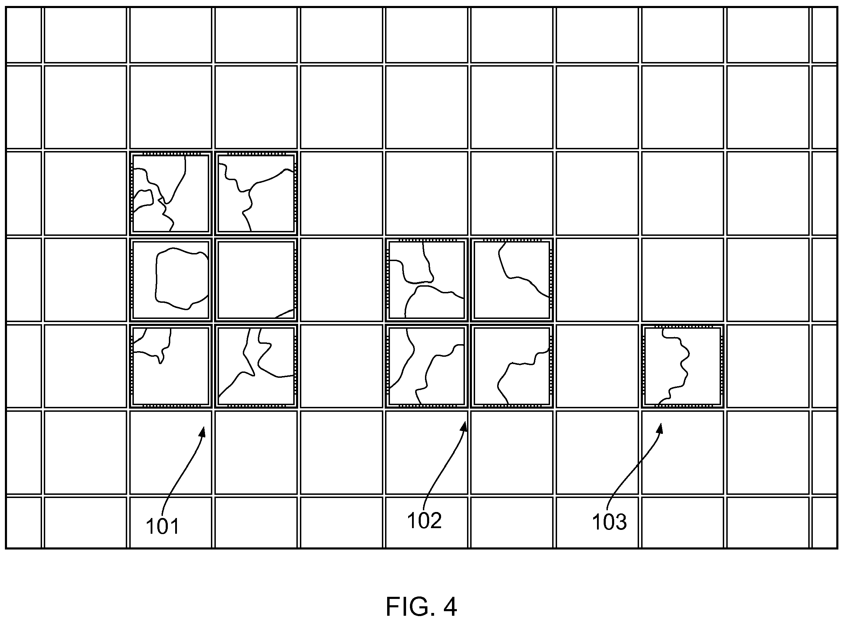

In some examples, the second lighting arrangement 40 might be arranged to provide room illumination from a majority of the underside of the frame 30, as shown, for example, in fig. 1. In other examples, this might not be the case. Fig. 4 illustrates examples in which multiple ceiling luminaires 101, 102 might be grouped together as a group of six 101, four 102 or some other quantity. In such examples, room illumination might only be provided from an outer periphery of the shape formed by the group of ceiling luminaires 101, 102, as shown in fig. 4.

The ceiling luminaire 100 (or a combination of ceiling luminaires 101, 102) might be used in combination with the grouped lighting system/method described in GB 2475724 A and/or the colour temperature adjustment system/method described in GB2551182A.

Where a structural feature has been described, it may be replaced by means for performing one or more of the functions of the structural feature whether that function or those functions are explicitly or implicitly described.

The term 'comprise' is used in this document with an inclusive not an exclusive meaning. That is any reference to X comprising Y indicates that X may comprise only one Y or may comprise more than one Y. If it is intended to use 'comprise' with an exclusive meaning then it will be made clear in the context by referring to "comprising only one.." or by using "consisting".

In this description, reference has been made to various examples. The description of features or functions in relation to an example indicates that those features or functions are present in that example. The use of the term 'example' or 'for example' or 'can' or 'may' in the text denotes, whether explicitly stated or not, that such features or functions are present in at least the described example, whether described as an example or not, and that they can be, but are not necessarily, present in some of or all other examples. Thus 'example', 'for example', 'can' or 'may' refers to a particular instance in a class of examples. A property of the instance can be a property of only that instance or a property of the class or a property of a sub-class of the class that includes some but not all of the instances in the class. It is therefore implicitly disclosed that a feature described with reference to one example but not with reference to another example, can where possible be used in that other example as part of a working combination but does not necessarily have to be used in that other example. Although embodiments have been described in the preceding paragraphs with reference to various examples, it should be appreciated that modifications to the examples given can be made without departing from the scope of the claims.

Features described in the preceding description may be used in combinations other than the combinations explicitly described above.

Although functions have been described with reference to certain features, those functions may be performable by other features whether described or not.

Although features have been described with reference to certain embodiments, those features may also be present in other embodiments whether described or not.

The term 'a' or 'the' is used in this document with an inclusive not an exclusive meaning. That is any reference to X comprising a/the Y indicates that X may comprise only one Y or may comprise more than one Y unless the context clearly indicates the contrary. If it is intended to use 'a' or 'the' with an exclusive meaning then it will be made clear in the context. In some circumstances the use of 'at least one' or 'one or more' may be used to emphasis an inclusive meaning but the absence of these terms should not be taken to infer and exclusive meaning.

The presence of a feature (or combination of features) in a claim is a reference to that feature) or combination of features) itself and also to features that achieve substantially the same technical effect (equivalent features). The equivalent features include, for example, features that are variants and achieve substantially the same result in substantially the same way. The equivalent features include, for example, features that perform substantially the same function, in substantially the same way to achieve substantially the same result.

In this description, reference has been made to various examples using adjectives or adjectival phrases to describe characteristics of the examples. Such a description of a characteristic in relation to an example indicates that the characteristic is present in some examples exactly as described and is present in other examples substantially as described.

Whilst endeavouring in the foregoing specification to draw attention to those features believed to be of importance it should be understood that the applicant may seek protection via the claims in respect of any patentable feature or combination of features hereinbefore referred to and/or shown in the drawings whether or not emphasis has been placed thereon.

## Claims

1. A ceiling luminaire, comprising:
a picture; and
a first lighting arrangement arranged to illuminate the picture;
a frame arranged to define a boundary of the picture; and
a second lighting arrangement arranged to provide room illumination from the frame.

2. The ceiling luminaire of claim 1, wherein the second lighting arrangement is arranged to provide room illumination from the frame by directing light in a substantially downwards direction in use.

3. The ceiling luminaire of claim 1 or 2, wherein the first lighting arrangement is arranged to illuminate the picture by directing light through the picture.

4. The ceiling luminaire of claim 3, wherein the light that is directed through the picture is directed in a substantially downwards direction in use.

5. The ceiling luminaire of any of the preceding claims, wherein the first lighting arrangement comprises at least one light source for generating light to illuminate the picture.

6. The ceiling luminaire of claim 5, further comprising at least one light guide for guiding light generated by the at least one light source along at least a first dimension and for directing the generated light through the picture at various positions along the first dimension, wherein, optionally, the at least one light guide is positioned above the picture in use.

7. The ceiling luminaire of claim 5 or 6, wherein the at least one light source is provided on at least one circuit board, and the frame defines a slot for receiving the at least one circuit board.

8. The ceiling luminaire of any of the preceding claims, wherein the second lighting arrangement comprises at least one light source for generating light to provide room illumination.

9. The ceiling luminaire of claim 8, wherein the at least one light source is provided on at least one circuit board, and the frame defines a slot for receiving the at least one circuit board.

10. The ceiling luminaire of claim 8 or 9, wherein the at least one light source is located within the frame.

11. The ceiling luminaire of claim 8, 9 or 10, wherein the second lighting arrangement comprises at least one louvre arranged to constrict the beam angle of light emitted by the second lighting arrangement via the frame.

12. The ceiling luminaire of any of claims 8 to 11, wherein the at least one louvre is configured to constrict the beam angle of light emitted by the second lighting arrangement in at least two dimensions.

13. The ceiling luminaire of any of claims 8 to 12, wherein the at least one louvre is located within the frame.

14. The ceiling luminaire of any of the preceding claims, wherein the picture is positioned in a recess defined by the frame.

15. The ceiling luminaire of any of the preceding claims, wherein the picture is arranged such that, in use, the picture is substantially parallel with a ceiling to which the ceiling luminaire is mounted.
